(19) Europäisches Patentamt
European Patent Office
Office européen des brevets

(11) EP 3 358 656 B1

(12) EUROPEAN PATENT SPECIFICATION

(45) Date of publication and mention
of the grant of the patent:
25.12.2019   Bulletin 2019/52

(51) Int Cl.:
$H01M\ 4/587^{(2010.01)}$          $H01M\ 4/133^{(2010.01)}$
$C01B\ 32/00^{(2017.01)}$          $H01M\ 10/0525^{(2010.01)}$
$H01M\ 4/66^{(2006.01)}$          $H01M\ 4/62^{(2006.01)}$
$H01M\ 4/583^{(2010.01)}$          $H01M\ 4/1393^{(2010.01)}$
$H01M\ 10/0569^{(2010.01)}$          $H01M\ 10/052^{(2010.01)}$
$H01M\ 4/02^{(2006.01)}$

(21) Application number: 16851319.0

(22) Date of filing: 21.09.2016

(86) International application number:
PCT/JP2016/077881

(87) International publication number:
WO 2017/057145 (06.04.2017 Gazette 2017/14)

(54) **CARBONACEOUS MATERIAL FOR NEGATIVE ELECTRODE OF NONAQUEOUS-ELECTROLYTE SECONDARY BATTERY, AND PROCESS FOR PRODUCING SAME**

KOHLENSTOFFHALTIGES MATERIAL FÜR NEGATIVELEKTRODE VON SEKUNDÄRBATTERIEN MIT WASSERFREIEM ELEKTROLYT UND VERFAHREN ZUR HERSTELLUNG DAVON

MATÉRIAU CARBONÉ POUR ÉLECTRODE NÉGATIVE DE PILE RECHARGEABLE À ÉLECTROLYTE NON AQUEUX, ET SON PROCÉDÉ DE FABRICATION

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 30.09.2015   JP 2015194724

(43) Date of publication of application:
08.08.2018   Bulletin 2018/32

(73) Proprietor: Kuraray Co., Ltd.
Okayama 710-0801 (JP)

(72) Inventors:
• IMAJI, Makoto
Tokyo 103-8552 (JP)
• YAGUCHI, Tatsuya
Tokyo 103-8552 (JP)
• KOBAYASHI, Shota
Tokyo 103-8552 (JP)
• TADA, Yasuhiro
Tokyo 103-8552 (JP)

(74) Representative: Zimmermann & Partner
Patentanwälte mbB
Postfach 330 920
80069 München (DE)

(56) References cited:
EP-A1- 2 892 096          EP-A2- 0 700 105
WO-A1-2014/034857          WO-A1-2014/034858
WO-A1-2015/059892          JP-A- 2016 152 222
JP-A- 2016 178 049          US-A1- 2015 024 277
US-A1- 2015 171 470          US-A1- 2015 180 020
US-B1- 6 335 122

**Description**

Technical Field

The present invention relates to a carbonaceous material for a non-aqueous electrolyte secondary battery. With the present invention, it is possible to provide a carbonaceous material for a non-aqueous electrolyte secondary battery negative electrode exhibiting a high discharge capacity and excellent charge/discharge efficiency.

Background Art

In recent years, large secondary batteries with high energy density and excellent output characteristics are being mounted in electric vehicles in response to increasing concern over environmental issues. Further increases in energy density are anticipated in order to extend cruising distance with one charge in EV applications. A theoretical lithium storage capacity of graphitic materials that are currently mainly used is 372 Ah/kg, and theoretical limits exist. Furthermore, alloy-based negative electrode materials containing tin, silicon, or the like have also been proposed as materials having high capacity, but these materials have large expansion and contraction due to charging and discharging, and therefore, durability is not sufficient and use by adding several % of these materials to graphite or the like is limited. In contrast, amorphous carbon materials have excellent durability and a large capacity exceeding the theoretical lithium storage capacity per unit weight of the graphitic material, and therefore, the materials are anticipated as high-capacity negative electrode materials. However, the carbon materials reported thus far do not have sufficient capacity. EP2892096 discloses a method of manufacturing a carbon material comprising heating a plant derived char in a non oxidising atmosphere and firing a mixture of a heated carbon precursor with a volatile organic compound.

Citation List

Patent Literature

Patent Document 1: JP 08-064207 A

Patent Document 2: JP 2008-010337 A

Patent Document 3: JP 09-007598 A

Summary of Invention

Technical Problem

An object of the present invention is to provide a non-aqueous electrolyte secondary battery having high discharge capacity and high charge/discharge efficiency. Furthermore, an object of the present invention is to provide a carbonaceous material for a secondary battery negative electrode used in the battery described above.

Solution to Problem

As a result of extensive studies, the present inventors surprisingly discovered when measuring an NMR spectrum of lithium nucleus for a non-aqueous electrolyte secondary battery having high discharge capacity and high charge/discharge efficiency, a non-aqueous electrolyte secondary battery using a carbonaceous material having a main resonance peak shifted 110 to 160 ppm to a lower magnetic field side with regard to a resonance peak of LiCl as a reference substance exhibited excellent discharge capacity and charge/discharge efficiency.
The present invention is based on this finding.
Therefore, the present invention relates to the following:

[1] a carbonaceous material for a non-aqueous electrolyte secondary battery negative electrode, using a plant as a carbon source, where potassium element content is 0.10 wt.% or less, true density determined by a pycnometer method using butanol is 1.35 to 1.50 g/cm$^3$, lithium is electrochemically doped in the carbonaceous material, and in a case where an NMR spectrum of lithium nucleus is measured, a main resonance peak shifted 110 to 160 ppm to a lower magnetic field side is exhibited with regard to a resonance peak of LiCl as a reference substance;

[2] the carbonaceous material for a non-aqueous electrolyte secondary battery negative electrode according to [1], where a press specific surface area ratio (A/B) of a specific surface area (A) determined by a BET method when the carbonaceous material is pressed at 2.6 MPa and a specific surface area (B) before pressing is 10 or less;

[3] the carbonaceous material for a non-aqueous electrolyte secondary battery negative electrode according to [1] or [2], where a ratio of hydrogen atoms to carbon atoms determined by elemental analysis is 0.10 or lower;

[4] the carbonaceous material for a non-aqueous electrolyte secondary battery negative electrode according to any one of [1] to [3], where true density measured using helium as a substitution medium is 1.30 to 2.00 g/cm$^3$;

[5] the carbonaceous material for a non-aqueous electrolyte secondary battery negative electrode according to any one of [1] to [4], where the true density determined by a pycnometer method using butanol is 1.35 to 1.46 g/cm$^3$;

[6] the carbonaceous material for a non-aqueous electrolyte secondary battery negative electrode according to any one of [1] to [5], where a plant-derived char impregnated with alkali is obtained from an alkali-treated carbonaceous material precursor heat treated at 500°C to 1000°C in a non-oxidizing gas atmosphere;

[7] a non-aqueous electrolyte secondary battery negative electrode, containing the carbonaceous material according to any one of [1] to [6];

[8] the non-aqueous electrolyte secondary battery negative electrode according to [7], where an electrode density is 0.80 g/cm$^3$ or higher;

[9] a non-aqueous electrolyte secondary battery, including the negative electrode according to [7] or [8];

[10] a method of manufacturing a carbonaceous material for a non-aqueous electrolyte secondary battery negative electrode, including: (1) an alkali impregnating step of adding a compound containing an alkali metal element to a plant-derived char to obtain a plant-derived char impregnated with alkali; (2) a heat treating step of heat treating the plant-derived char impregnated with alkali at 500°C to 1000°C in a non-oxidizing gas atmosphere to obtain an alkali-treated carbonaceous material precursor; (3) a gas phase de-mineralizing step of heat treating the alkali-treated carbonaceous material precursor at 500°C to 1250°C in an inert gas atmosphere containing a halogen compound; (4) a step of pulverizing the carbonaceous material precursor obtained by gas phase de-mineralizing; (5) a step of main firing the pulverized carbonaceous material precursor at 800°C to 1600°C in a non-oxidizing gas atmosphere; and (6) a step of coating the fired material with pyrolytic carbon;

[11] the method of manufacturing a carbonaceous material for a non-aqueous electrolyte secondary battery negative electrode according to [10], where the main firing step (5) and coating step (6) are performed by mixing the pulverized carbonaceous material precursor and a volatile organic compound that is solid at ambient temperature and having a residual carbon ratio that is less than 5 wt.% when ignited at 800°C, and then main firing at 800°C to 1600°C in a non-oxidizing gas atmosphere;

[12] the method of manufacturing a carbonaceous material for a non-aqueous electrolyte secondary battery negative electrode according to [10] or [11], further including a step of heat treating at 800°C to 1500°C in a non-oxidizing gas atmosphere (7); and

[13] the method of manufacturing a carbonaceous material for a non-aqueous electrolyte secondary battery negative electrode according any one of [10] to [12], where an added amount of alkali in the plant-derived char impregnated with alkali is 5 wt.% or greater. Note that the scope of the patent claims of Patent Document 1 describes a carbonaceous material having a main resonance peak shifted 80 to 200 ppm to a lower magnetic field side with regard to a resonance peak of LiCl as a reference substance. However, a carbonaceous material with a coconut husk used as a carbon source, a carbonaceous material having a main resonance peak shifted 105 ppm is obtained in the Examples. Furthermore, the scope of the patent claims of Patent Document 2 discloses a carbonaceous material having a resonance peak shifted 10 to 40 ppm and resonance peak shifted 55 to 130 ppm. However, a carbonaceous material obtained in the Examples is a carbonaceous material having a resonance peak shifted approximately 90 ppm and resonance peak shifted 20 ppm. Furthermore, the scope of the patent claims in Patent Document 3 describes a carbonaceous material exhibiting a peak of 10 to 20 ppm and 110 to 140 ppm when measuring an NMR spectrum of lithium nucleus at -40°C. However, the NMR spectrum is measured at -40°C, and a carbonaceous material described in the Examples uses pitch as a carbon source. Therefore, to the best of the present inventor's knowledge, a carbonaceous material using a plant as a carbon source and having a main resonance peak shifted 110 to 160 ppm to a lower magnetic field side with regard to a resonance peak of LiCl has not been achieved.

Advantageous Effects of Invention

With the carbonaceous material for a non-aqueous electrolyte secondary battery of the present invention, it is possible to provide a carbonaceous material for a non-aqueous electrolyte secondary battery negative electrode exhibiting a high discharge capacity and excellent charge/discharge efficiency. The carbonaceous material with the main resonance peak shifted 110 to 160 ppm has a low irreversible capacity, and therefore is considered to exhibit high discharge capacity and excellent charge/discharge efficiency. In other words, the carbonaceous material of the present invention is considered to have optimal pores for inserting dopable and dedopable lithium.

Description of Embodiments

[1] Carbonaceous material for non-aqueous electrolyte secondary battery negative electrode

A carbonaceous material for a non-aqueous electrolyte secondary battery negative electrode of the present invention is a carbonaceous material for a non-aqueous electrolyte secondary battery negative electrode using a plant as a carbon source, where potassium element content is 0.10 wt.% or less, true density determined by a pycnometer method using butanol is 1.35 to 1.50 g/cm$^3$, lithium is electrochemically doped in the carbonaceous material, and in a case where an NMR spectrum of lithium nucleus is measured, a main resonance peak shifted 110 to 160 ppm to a lower magnetic field side is exhibited with regard to a resonance peak of LiCl as a reference substance.

The carbonaceous material for a non-aqueous electrolyte secondary battery negative electrode of the present invention is not limited, and can be manufactured by a "method of manufacturing a carbonaceous material for a non-aqueous electrolyte secondary battery negative electrode" described later. In other words, manufacturing is possible by (1) an alkali impregnating step, (2) a heat treating step, (3) gas phase demineralizing step, (4) pulverizing step, (5) main firing step, and (6) coating step. In particular, the carbonaceous material having the aforementioned butanol true density can be obtained by (2) the heat treating step of heat treating a plant-derived char impregnated with alkali at 500°C to 1000°C in a non-oxidizing gas atmosphere to obtain an alkali-treated carbonaceous material precursor.

Carbon Source

A carbon source of the carbonaceous material for a non-aqueous electrolyte secondary battery negative electrode of the present invention is derived from a plant. The plant used as the carbon source is not particularly limited, and examples can include coconut husks, coffee beans, tea leaves, sugar cane, fruits (tangerines or bananas), straw, deciduous trees, coniferous trees, bamboo, and rice hulks. The plants may be used independently or two or more types may be combined, but coconut husks and coffee beans are particularly preferable from the perspective of availability in large quantities. The palm tree of the coconut husk raw material is not particularly limited, and examples can include oil palms (African oil palms), coconut palms, salak, and double coconut palms. The coconut husks obtained from these palm trees can be independently used or used in combination, and the coconut husks are particularly preferably derived from a coconut palm or oil palm used as a food product, cleaning agent raw material, biodiesel oil raw material, or the like, and are a biomass waste material generated in large quantities.

An extraction residue from which drinkable coffee components have been extracted from coffee beans is preferable as a carbon source that uses coffee beans. A portion of the mineral components of the extraction residue when extracting a coffee component is extracted and removed, and of these, industrially extracted coffee extraction residue is particularly preferable from the perspective of the residue being moderately pulverized and available in large quantities.

The plant-derived carbon source has a cavity derived from a conduit and sieve tube, and therefore, an optimal porous structure is formed by heat treatment after impregnating alkali, and use as a negative electrode of a secondary battery having excellent discharge capacity and exhibiting excellent charge/discharge efficiency is possible.

Potassium element content

The potassium element content of the carbonaceous material for a non-aqueous electrolyte secondary battery negative electrode of the present invention is 0.10 wt.% or less, preferably 0.05 wt.% or less, and even more preferably 0.03 wt.% or less. In a non-aqueous electrolyte secondary battery using a carbonaceous material for a negative electrode having a potassium content exceeding 0.10 wt.%, the dedoping capacity may be reduced and non-dedoping capacity may increase.

True density

The true density of a graphitic material having an ideal structure is 2.27 g/cm$^3$, and the true density tends to be reduced as the crystal structure becomes disordered. Therefore, the true density can be used as an indicator of the carbon structure.

Butanol true density

The butanol true density of the carbonaceous material of the present invention is from 1.35 to 1.50 g/cm$^3$. An upper limit of the true density is 1.48 g/cm$^3$ or lower, more preferable 1.46 g/cm$^3$ or lower, and even more preferably 1.45 g/cm$^3$ or lower. A lower limit of the true density is preferably 1.36 g/cm$^3$ or higher, more preferably 1.37 g/cm$^3$ or

or higher, even more preferably 1.38 g/cm$^3$ or higher, and even more preferably 1.39 g/cm$^3$ or higher. A carbonaceous material having a true density exceeding 1.50 g/cm$^3$ may have a reduced number of pores at a size capable of storing lithium, and reduced the doping and dedoping capacity. Furthermore, an increase in true density involves selective orientation of a carbon hexagonal plane, and therefore, the carbonaceous material often undergoes expansion and contraction during lithium doping and dedoping, which is not preferable. On the other hand, a carbonaceous material having a true density less than 1.35 g/cm$^3$ may not be able to maintain a stable structure as a storing site of lithium due to an electrolyte solution entering fine pores. Furthermore, electrode density may be reduced, thereby causing a reduction in volume energy density.

Helium true density

The true density ($\rho_{He}$) measured using helium gas as a substitution medium is an indicator of helium gas diffusibility. When this value is large and is a value near the theoretical density of 2.27 g/cm$^3$, it indicates that there are many pores where helium can permeate. This means that there is an abundance of open pores. On the other hand, helium has a very small atomic diameter (0.26 nm), and therefore, pores equal to or smaller than the helium atom diameter are considered to be closed pores, and low helium gas diffusibility means that many closed pores are present.
The negative electrode material for a non-aqueous electrolyte secondary battery of the present invention is not limited, but is from 1.35 to 2.00 g/cm$^3$. A lower limit of the helium true density is preferably 1.36 g/cm$^3$ or higher, and more preferably 1.37 g/cm$^3$ or higher. An upper limit of the helium true density is preferably 1.90 g/cm$^3$ or higher, and more preferably 1.80 g/cm$^3$ or higher. With a carbonaceous material having a helium true density that is lower than 1.35 g/cm$^3$, pores may be filled, and thus the discharge capacity may be reduced. Furthermore, with a carbonaceous material having a helium true density exceeding 2.00 g/cm$^3$, a carbonaceous film may not be sufficiently formed, and thus, irreversible capacity may be increased. In other words, when the helium true density is within the aforementioned range, efficiency of the secondary battery is thought to improve.

NMR spectrum of lithium nucleus

In the carbonaceous material for a non-aqueous electrolyte secondary battery negative electrode of the present invention, lithium is electrochemically doped in the carbonaceous material, and in the case where an NMR spectrum of lithium nucleus is measured, a main resonance peak shifted 110 to 160 ppm to a lower magnetic field side is exhibited with regard to a resonance peak of LiCl as a reference substance. In the present specification, "main resonance peak" refers to a peak having a maximum peak area of a resonance peak in a range from 0 ppm to 160 ppm on the lower magnetic field side.
A lower limit of the main resonance peak of the carbonaceous material for a non-aqueous electrolyte secondary battery negative electrode of the present invention is preferably 113 ppm, more preferably 116 ppm, even more preferably 120 ppm, and most preferably 124 ppm. In a case where the main resonance peak is less than 110 ppm, sufficient discharge capacity may not be achieved. An upper limit of the main resonance peak is preferably 155 ppm, and more preferably 150 ppm. In a case where the main resonance peak exceeds 160 ppm, press durability may be reduced.
The main resonance peak shifts 110 to 160 ppm to the lower magnetic field side with regard to the resonance peak of LiCl, and therefore, the non-aqueous electrolyte secondary battery using the carbonaceous material of the present invention can exhibit excellent discharge capacity and excellent charge/discharge efficiency. The carbonaceous material for a non-aqueous electrolyte secondary battery negative electrode of the present invention is not limited, and can be obtained by using a carbonaceous material precursor obtained by impregnating alkali in a plant-derived char, and heat treating the char at 500°C to 1000°C and then gas phase de-mineralizing.
A carbon electrode (positive electrode) of a secondary battery was used in main resonance peak measurements where an operation of applying electricity for one hour at a current density of 0.50 A/cm$^2$ and then pausing for two hours was repeated, and then charging was performed until an equilibrium potential between terminals reached 4 mV. After completing doping, the carbon electrode (positive electrode) was extracted in an argon atmosphere, a surface of the electrode was washed by dimethylcarbonate and then dried, and then the electrode was used in NMR spectrum measurements. Note that the amount of carbonaceous material in the positive electrode used in measurements was adjusted to 40 mg (20 mg $\times$ 2). The secondary battery can be manufactured using a carbon electrode (positive electrode), lithium negative electrode, and a mixed solvent of ethylenecarbonate, dimethylcarbonate, and ethylmethylcarbonate (1:2:2) containing LiPF$_6$ (1.4 mols/L) as an electrolyte solution. Furthermore, the carbon electrode (positive electrode) can be obtained by adding N-methyl-2-pyrrolidone to 90 parts by weight of a carbonaceous material powder and 100 parts by weight of polyvinylidene fluoride ("KF#1100" available from Kureha Corporation) to form a paste, uniformly coating onto a copper foil, drying, and then punching into a disc shape with a 15 mm diameter. Furthermore, the negative electrode can be obtained by punching a thin sheet of metallic lithium with a thickness of 0.8 mm into a disc shape with a diameter of 15 mm.

The measurement temperature of the main resonance peak is not particularly limited, but is preferably room temperature, such as 20 to 30°C, preferably 25 to 30°C, and more preferably 26°C. By measuring at room temperature, several peaks will not appear, and measurement of the main resonance peak is simple.

Specific surface area

The specific surface area may be determined with an approximation derived from a BET equation based on nitrogen adsorption. The specific surface area of the carbonaceous material of the present invention 30 $m^2/g$ or less. When the specific surface area exceeds 30 $m^2/g$, reactions with the electrolyte solution increase, which may lead to an increase in irreversible capacity, and therefore, battery performance may be reduced. An upper limit of the specific surface area is preferably 30 $m^2/g$ or less, more preferably 20 $m^2/g$, and even more preferably 10 $m^2/g$ or less. Furthermore, a lower limit of the specific surface area is not particularly limited, but when the specific surface area is less than 0.5 $m^2/g$, input/output characteristics may be reduced, and therefore, the lower limit of the specific surface area is preferably 0.5 $m^2/g$ or greater.

Press specific surface ratio

The carbonaceous material for a non-aqueous electrolyte secondary battery negative electrode of the present invention has a specific surface area (A/B) before and after pressing (hereinafter, referred to as press specific surface area ratio) of a specific surface area (A) determined by a BET method when pressing at 2.6 MPa and a specific surface area (B) before pressing, that is 10 or less. The press specific surface area ratio is preferably 10 or less, more preferably 8 or less, and even more preferably 6 or less. A lower limit of the press specific surface area ratio is 1, but may be 1.1 or higher in a certain aspect, 1.2 or higher in another aspect, and 1.3 or higher in yet another aspect. The carbonaceous material for a non-aqueous electrolyte secondary battery negative electrode of the present invention has excellent press durability. Specifically, the structure of the carbonaceous material is less likely to be destroyed with regard to pressure when manufacturing the carbon electrode (positive electrode). When the structure of the carbonaceous material is destroyed, an increase in specific surface area is observed, but the carbonaceous material of the present invention has excellent press durability, and therefore, an increase in specific surface area is reduced even in a case where a strong pressure is applied. The press specific surface area ratio indicates press durability, and as the numerical value approaches 1, excellent press durability is exhibited.

The reason that the carbonaceous material for a non-aqueous electrolyte secondary battery negative electrode of the present invention has excellent press durability has not been studied in detail, but is thought to be as follows. However, the present invention is not limited to the following description. The carbonaceous material of the present invention uses a plant-derived carbon source. Furthermore, the carbonaceous material of the present invention can be manufactured using a carbonaceous material precursor obtained by impregnating alkali in a plant-derived char, and heat treating the char at 500°C to 1000°C and then gas phase de-mineralizing. The carbonaceous material obtained from the carbonaceous material precursor has an appropriate amount of pores, and has a carbon skeleton with sufficient toughness, and therefore, favorable press durability can be maintained.

Note that pressing at 2.6 MPa can be performed by the following method. 0.5 g of the carbonaceous material is filled into a cylindrical mold with a 10 mm diameter and then pressed at 2.6 MPa (1 $tf/cm^2$). Measurements of the specific surface area are performed on the pressed carbonaceous material using a method described in the Examples, and then calculated as the specific surface area (A) determined by the BET method.

Atomic ratio (H/C) of hydrogen atoms and carbon atoms

The H/C ratio is determined by measuring hydrogen atoms and carbon atoms by elemental analysis, and the hydrogen content in the carbonaceous material decreases as the degree of carbonization increases, and therefore, H/C tends to be reduced. Therefore, H/C is effective as an indicator for the degree of carbonization. The H/C of the carbonaceous material of the present invention is 0.10 or lower, and preferably 0.08 or lower. The ratio is particularly preferably 0.05 or lower. When the ratio H/C of hydrogen atoms and carbon atoms exceeds 0.10, there are problems where a large number of functional groups are present in the carbonaceous material, lithium doped by a reaction with lithium in the negative electrode carbon is not completely dedoped, and a large amount of lithium remains in the negative electrode carbon, and thus the lithium serving as an active material is wastefully consumed.

Average particle size $D_{v50}$

The average particle size ($D_{v50}$) of the carbonaceous material of the present invention is from 1 to 50 $\mu m$. A lower limit of the average particle size is preferably 1 $\mu m$ or greater, more preferably 1.5 $\mu m$ or greater, and particularly

preferably 2.0 $\mu$m or greater. When the average particle size is less than 1 $\mu$m, the amount of fine powder is increased, and therefore the specific surface area increases. Therefore, reactivity with an electrolyte solution increases, and irreversible capacity, which is the capacity that is charged but not discharged, also increases, and thus the percentage of the capacity of the positive electrode that is wasted increases, which is not preferable. An upper limit of the average particle size is preferably 40 $\mu$m or less, and more preferably 35 $\mu$m or less. When the average particle size exceeds 50 $\mu$m, the diffusion free paths of lithium inside the particles increase, and therefore, rapid charging and discharging are difficult. Furthermore, in a secondary battery, increasing an electrode surface area is important for improving input/output characteristics, and therefore, a coating thickness of the active material on the current collector plate needs to be reduced when preparing the electrode. In order to reduce the coating thickness, the particle size of an active material needs to be reduced. From this perspective, the upper limit of the average particle size is preferably 50 $\mu$m or less.

[2] Non-aqueous electrolyte secondary battery negative electrode

Manufacturing of negative electrode

A negative electrode using the carbonaceous material of the present invention can be manufactured by adding a binder to the carbonaceous material, adding an appropriate amount of a suitable solvent, kneading to form an electrode mixture, coating the electrode mixture on a current collector plate formed from a metal plate or the like, drying, and then pressure-forming. An electrode having high electrical conductivity can be manufactured using the carbonaceous material of the present invention without particularly adding a conductive auxiliary agent, but a conductive auxiliary agent may be added as necessary when the electrode mixture is prepared for the purpose of imparting even higher electrical conductivity. Acetylene black, Ketjen black, carbon nanofibers, carbon nanotubes, carbon fibers, or the like can be used as the conductive auxiliary agent. The added amount differs based on the type of the conductivity auxiliary agent that is used, but when the added amount is too low, expected conductivity cannot be achieved, which is not preferable. In contrast, when the added amount is too high, dispersion of the conductivity agent in the electrode mixture is inferior, which is not preferable. From this perspective, a ratio of the added amount of the conductive auxiliary agent is preferably from 0.5 to 15 wt.% (herein, the amount of active material (carbonaceous material) + amount of binder + amount of conductivity auxiliary agent = 100 wt.%), more preferably from 0.5 to 7 wt.%, and particularly preferably from 0.5 to 5 wt.%. The binder is not particularly limited so long as the binder does not react with an electrolyte solution, and examples include polyvinylidene fluoride (PVDF), polytetrafluoroethylene, a mixture of SBR (styrene-butadiene rubber) and CMC (carboxymethyl cellulose), and the like. Of these, PVDF is preferable because the PVDF adhered to a surface of an active material is less likely to inhibit lithium-ion movement and favorable input/output characteristics are achieved. In order to dissolve the PVDF to form a slurry, a polar solvent such as N-methylpyrrolidone (NMP) or the like is preferably used, but an aqueous emulsion such as SBR or the like, or CMC can be also used by dissolving in water. When the added amount of the binder is too high, resistance of the obtained electrode is high, and therefore, internal resistance of the battery is high and battery characteristics are reduced, which is not preferable. When the added amount of the binder is too low, bonding of the negative electrode materials to each other and to a current collector is insufficient, which is not preferable. A preferable added amount of the binder differs based on the type of binder that is used, but when a PVDF-based binder is used, the amount is preferably from 3 to 13 wt.%, and more preferably from 3 to 10 wt.%. On the other hand, with a binder using water in a solvent, a plurality of binders such as a mixture of SBR and CMC and the like are often mixed and used, and a total amount of all of the used binders is preferably from 0.5 to 5 wt.% and more preferably from 1 to 4 wt.%. An electrode active material layer is typically formed on both sides of a current collector plate, but may be formed on one side as necessary. As the thickness of the electrode active material layer increases, the number of current collector plates or separators is reduced, which is preferable for increasing capacity, but a wider electrode surface area opposite from a counter electrode is advantageous from the perspective of improving the input/output characteristics, and therefore, when the active material layer is too thick, the input/output characteristics are reduced, which is not preferable. The thickness of a preferable active material layer (one surface) is not limited, and may be within a range of 10 $\mu$m to 1000 $\mu$m in consideration of various applications. However, the thickness is preferably from 10 to 200 $\mu$m, more preferably from 10 to 150 $\mu$m, even more preferably from 20 to 120 $\mu$m, and particularly preferably from 30 to 100 $\mu$m.

A negative electrode normally has a current collector. Stainless steel (SUS), copper, nickel, or carbon can be used as a negative electrode current collector for example, and of these, copper or SUS is preferable.

[3] Non-aqueous electrolyte secondary battery

When a negative electrode for a non-aqueous electrolyte secondary battery is formed using the negative electrode material of the present invention, other materials configuring a battery such as a positive electrode material, separator, electrolyte solution, and the like are not particularly limited, and various materials that are used in the related art or have been proposed for non-aqueous solvent secondary batteries can be used.

Positive electrode

The positive electrode contains a positive electrode active material and may further contain a conductive auxiliary agent and/or binder. A mixing ratio of the positive electrode active material and another material in the positive electrode active material layer is not limited and can be appropriately determined so long as the effect of the present invention can be achieved.

The positive electrode active material can be used without limiting the positive electrode active material. Examples can include layered oxide-based complex metal chalcogen compounds (as represented by $LiMO_2$, where M represents a metal such as $LiCoO_2$, $LiNiO_2$, $LiMnO_2$, or $LiNi_xCo_yMn_zO_2$ (where x, y, and z represent composition ratios)), olivine-based complex metal chalcogen compounds (as represented by $LiMPO_4$, where M represents a metal such as $LiFePO_4$ or the like), and spinel-based complex metal chalcogen compounds (as represented by $LiM_2O_4$, where M represents a metal such as $LiMn_2O_4$ or the like), and these chalcogen compounds may be mixed as necessary. Furthermore, ternary $[Li(Ni-Mn-Co)O_2]$ materials where a portion of cobalt in lithium cobaltate is substituted with nickel and manganese and the three components of cobalt, nickel, and manganese are used to enhance material stability, and NCA-based materials $[Li(Ni-Co-Al)O_2]$ where aluminum is used place of manganese in the ternary materials described above are known, and these materials can be used.

The positive electrode may further contain a conductive auxiliary agent and/or binder. Examples of the conductivity auxiliary agent can include acetylene black, Ketjen black, and carbon fibers. The content of the conductive auxiliary agent is not limited, but is from 0.5 to 15 wt.%, for example. Examples of the binder can include PTFE, PVDF, and other binders containing fluorine. The content of the conductive auxiliary agent is not limited, but is from 0.5 to 15 wt.%, for example. Furthermore, the thickness of the positive electrode active material layer is not limited, and may be within a range of 10 $\mu$m to 1000 $\mu$m in consideration of various applications. However, the thickness is preferably from 10 to 200 $\mu$m, more preferably from 10 to 150 $\mu$m, even more preferably from 20 to 120 $\mu$m, and particularly preferably from 30 to 100 $\mu$m.

The positive electrode active material layer normally has a current collector. SUS, aluminum, nickel, iron, titanium, and carbon can be used as a positive electrode current collector for example, and of these, aluminum or SUS is preferable.

Electrolyte solution

A non-aqueous electrolyte solution used in combination with the positive electrode and negative electrode combination is generally formed by dissolving an electrolyte in a non-aqueous solvent. One type or two or more types of organic solvents such as propylene carbonate, ethylene carbonate, dimethyl carbonate, diethyl carbonate, dimethoxyethane, diethoxyethane, $\gamma$-butyl lactone, tetrahydrofuran, 2-methyl tetrahydrofuran, sulfolane, 1,3-dioxolane, or the like may be used in combination as the non-aqueous solvent for example. Furthermore, $LiClO_4$, $LiPF_6$, $LiBF_4$, $LiCF_3SO_3$, $LiAsF_6$, $LiCl$, $LiBr$, $LiB(C_6H_5)_4$, $LiN(SO_3CF_3)_2$, or the like the like can be used as the electrolyte. The secondary battery is generally formed by facing a positive electrode and negative electrode formed as described above toward each other via a liquid-permeable separator formed from a nonwoven fabric, other porous material, or the like as necessary, and then immersing in the electrolyte solution. A liquid-permeable separator formed from nonwoven fabric and other porous materials that are generally used in secondary batteries can be used as the separator. Alternatively, a solid electrolyte formed from polymer gel in which an electrolyte solution is impregnated can be also used in place of a separator or along with a separator.

[4] Manufacturing method of carbonaceous material for non-aqueous electrolyte secondary battery negative electrode

A method of manufacturing a carbonaceous material for a non-aqueous electrolyte secondary battery negative electrode includes: (1) an alkali impregnating step of adding a compound containing an alkali metal element to a plant-derived char to obtain a plant-derived char impregnated with alkali; (2) a heat treating step of heat treating the plant-derived char impregnated with alkali at 500°C to 1000°C in a non-oxidizing gas atmosphere to obtain an alkali-treated carbonaceous material precursor; (3) a gas phase de-mineralizing step of heat treating the alkali-treated carbonaceous material precursor at 500°C to 1250°C in an inert gas atmosphere containing a halogen compound; (4) a step of pulverizing the carbonaceous material precursor obtained by gas phase de-mineralizing; (5) a step of main firing the pulverized carbonaceous material precursor at 800°C to 1600°C in a non-oxidizing gas atmosphere; and (6) a step of coating the fired material with pyrolytic carbon. The method of manufacturing a carbonaceous material for a non-aqueous electrolyte secondary battery negative electrode of the present invention preferably further includes (7) a step of heat treating at 800°C to 1500°C in a non-oxidizing gas atmosphere.

Although not limited, the carbonaceous material for a non-aqueous electrolyte secondary battery negative electrode of the present invention may be manufactured by the method of manufacturing a carbonaceous material for a non-aqueous electrolyte secondary battery negative electrode.

Alkali impregnating step (1)

The alkali impregnating step (1) is a step of adding a compound containing an alkali metal element to a plant-derived char to obtain a plant-derived char impregnated with alkali.

Plant-derived char

The plant used as the carbon source of the plant-derived char is not particularly limited, and examples can include coconut husks, coffee beans, tea leaves, sugar cane, fruits (tangerines or bananas), straw, deciduous trees, coniferous trees, bamboo, and rice hulks. The plants may be used independently or two or more types thereof may be combined, but coconut husks are particularly preferable from the perspective of availability in large quantities.

The palm tree of the coconut husk raw material is not particularly limited, and examples can include oil palms (African oil palms), coconut palms, salak, and double coconut palms. The coconut husks obtained from these palm trees can be independently used or used in combination, and the coconut husks are particularly preferably derived from a coconut palm or oil palm used as a food product, cleaning agent raw material, biodiesel oil raw material, or the like, and are a biomass waste material generated in large quantities.

The manufacturing method of the present invention is not limited, but the plant can be pre-baked and obtained in a charred form (for example, a coconut husk char), and the char is preferably used as a raw material. Char generally refers to a powdery solid that is rich in carbon produced without melting and softening when heating coal, but also refers to a powdery solid that is rich in carbon produced by heating an organic material without melting and softening.

The method of manufacturing char from a plant is not particularly limited, and the char is manufactured by pre-baking a plant raw material at 300°C to 550°C in an inert atmosphere. The pre-firing temperature is preferably from 350 to 500°C, and is more preferably from 375 to 450°C. By performing pre-firing, a turbostratic structure of the obtained carbonaceous material is developed, and thus excellent press durability can be exhibited. In other words, the structure of the carbonaceous material is less likely to be destroyed by pressure when manufacturing the carbon electrode (positive electrode). Therefore, the carbonaceous material of the present invention is used, and therefore, excellent discharge capacity and excellent initial efficiency can be achieved.

An average particle size of the plant-derived char is not limited, and an upper limit of the average particle size is preferably 300 μm or less, more preferably 280 μm or less, and even more preferably 250 μm or less. When the average particle size is too large, impregnation of an alkali metal element or alkali metal compound may not be uniform. Furthermore, a lower limit of the average particle size of the plant-derived char is not particularly limited, and is preferably 1 μm or greater, more preferably 3 μm or greater, and even more preferably 5 μm or greater. When the particle size is too small, a gas phase containing removed potassium or the like and the plant-derived char are difficult to separate in the gas phase de-mineralizing step (3).

The plant-derived char is not necessarily pulverized, but can be pulverized in order to achieve the aforementioned appropriate average particle size. The pulverizer used for pulverizing is not particularly limited, and a jet mill, rod mill, vibratory ball mill, or hammer mill can be used for example.

Alkali metal element or compound containing alkali metal element

An alkali metal element such as lithium, sodium, potassium or the like may be used as the alkali metal element impregnated in the plant-derived char. Lithium compounds have problems such as a lower space-expanding effect as compared to other alkali metal compounds and smaller reserves as compared to other alkali metal elements. On the other hand, when heat treatment is performed on a potassium compound in a reducing atmosphere in the presence of carbon, metallic potassium is formed, but metallic potassium has problems such as higher reactivity with moisture than other alkali metal elements, which results in particularly high risk. However, with the present invention, the gas phase de-mineralizing step (3) is performed, and therefore, metallic potassium is sufficiently removed. Therefore, metallic potassium can also be preferably used. From this perspective, potassium or sodium is preferable as an alkali metal element.

The alkali metal element may be impregnated in the plant-derived char in a metal condition, but may also be impregnated as a compound containing an alkali metal element such as a hydroxide, carbonate, hydrogen carbonate, halogen compound, or the like (hereinafter, also referred to as an alkali metal compound). The alkali metal compound is not limited, but a hydroxide is preferable from the perspective that permability is high and uniform impregnation is possible in the plant-derived char.

Plant-derived char impregnated with alkali

The alkali metal element or alkali metal compound can be added to the aforementioned plant-derived char to obtain a plant-derived char impregnated with alkali. The method for adding the alkali metal element or alkali metal compound is not particularly limited. For example, a predetermined amount of the alkali metal element or alkali metal compound may be mixed in a powdery form with regard to the plant-derived char. Furthermore, the alkali metal compound may be dissolved in an appropriate solvent to prepare an alkali metal compound solution. After the alkali metal compound solution is mixed with the plant-derived char, the solvent may be evaporated off to prepare a plant-derived char impregnated with an alkali metal compound. Specifically, although not particularly limited, an alkali metal hydroxide such as sodium hydroxide or the like may be dissolved in water which is a favorable solvent to form an aqueous solution, and then the solution may be added to the plant-derived char. After heating to 50°C or higher, the moisture can be removed at ambient pressure or reduced pressure such that the alkali metal element or alkali metal compound can be added to the carbonaceous material precursor. Plant-derived char is often hydrophobic, and when the affinity of the alkali aqueous solution is low, the affinity of the alkali aqueous solution with the plant-derived char can be improved by appropriately adding an alcohol. In a case where an alkali hydroxide is used, the alkali hydroxide absorbs carbon dioxide upon impregnating treatment in air, and the alkali hydroxide changes to alkali carbonate, and thus permeation of the alkali into the plant-derived char is reduced, and therefore, the concentration of carbon dioxide in the atmosphere is preferably reduced. Moisture should be removed to a degree that enables the fluidity of the plant-derived char impregnated with alkali to be maintained.

The impregnating amount of the alkali metal element or alkali metal compound impregnated in the plant-derived char is not particularly limited, but an upper limit of the added amount is preferably 40.0 wt.% or less, more preferably 30.0 wt.% or less, and even more preferably 25.0 wt.% or less. When the impregnating amount of the alkali metal element or alkali metal compound is too high, the specific surface area increases, and thus irreversible capacity increases, which is not preferable. Furthermore, the number of cavities may excessively increase, and press durability may be reduced. Furthermore, a lower limit of the added amount is not particularly limited, but is preferably 3.0 wt.% or greater, more preferably 5.0 wt.% or greaer, and even more preferably 7.0 wt.% or greater. When the added amount of the alkali metal element or alkali metal compound is too low, a porous structure for doping and dedoping is difficult to form, which is not preferable. When the alkali metal element or the alkali metal compound is dissolved or dispersed in an aqueous solution or appropriate solvent and impregnated into the plant-derived char, and the solvent such as water or the like is then volatilized and dried, the plant-derived char impregnated with alkali may agglomerate into a solid. In a case where the plant-derived char impregnated with alkali in a solid condition is heat treated, cracked gas or the like generated during the heat treatment cannot be sufficiently discharged, which has an adverse effect on performance. Therefore, in a case where the plant-derived char impregnated with alkali is a solid material, the heat treating step (2) is preferably performed by cracking the plant-derived char impregnated with alkali.

Heat treating step (2)

The heat treating step is a step of heat treating the plant-derived char impregnated with alkali at 500°C to 1000°C in a non-oxidizing gas atmosphere to obtain an alkali-treated carbonaceous material precursor.

A preferable porous structure is formed by heat treating the plant-derived char impregnated with alkali at 500°C to 1000°C in a non-oxidizing gas atmosphere. The heat treating temperature is preferably from 500 to 1000°C, more preferably from 600 to 900°C, and even more preferably from 700 to 850°C.

Heat treating is performed in a non-oxidizing gas atmosphere, and examples of non-oxidizing gases can include helium, nitrogen, argon, and the like. Furthermore, heat treating can be performed under reduced pressure, such as a pressure of 10 kPa or lower for example. The heat treating time is not particularly limited, and can be from 0.5 to 10 hours, but is preferably from 1 to 5 hours.

The plant-derived char has a cavity derived from a conduit and sieve tube, and therefore, an optimal porous structure is formed by heat treatment after impregnating alkali, and use as a negative electrode of a secondary battery having excellent discharge capacity and exhibiting excellent charge/discharge efficiency is possible.

Gas phase de-mineralizing step (3)

The gas phase de-mineralizing step (3) is a step of heat treating the alkali-treated carbonaceous material precursor at 500°C to 1250°C in an inert gas atmosphere containing a halogen compound.

Of the alkali metals that are alkali-impregnated by the gas phase de-mineralizing step (3), the alkali metal remaining in the heat treating step can be removed. Furthermore, potassium elements, iron elements, and the like included in the plant can be efficiently removed. Furthermore, other alkali metals, alkali earth metals, as well as nickel and other transition metals can be removed.

Furthermore, a carbonaceous material or a negative electrode manufactured by the plant-derived char can dope a large amount of active materials, and therefore is useful as a negative electrode material for a non-aqueous electrolyte secondary battery. However, the plant-derived char contains a large amount of metal elements and particularly contains a large amount of potassium (for example, approximately 0.3% in coconut husk char). Furthermore, a carbonaceous material manufactured from the plant-derived char containing a large amount of metal elements such as iron or the like (for example, approximately 0.1% of an iron element in coconut husk char) negatively affects electrochemical characteristics and safety when used as a negative electrode. Therefore, the content of potassium elements, calcium elements, and the like included in the carbonaceous material for a negative electrode is preferably reduced as much as possible. Furthermore, the plant-derived char contains an alkali metal (such as sodium), alkali earth metal (such as magnesium or calcium), transition metal (such as iron or copper), and other elements in addition to potassium, but the content of the metals is preferably reduced. This is because in a case where the plant-derived char contains these metals, it is highly possible that impurities elute from the negative electrode into the electrolyte solution during dedoping, and negatively affect the battery performance and safety.

Potassium element, iron element, and the like included in the plant-derived char can be efficiently removed by the gas phase de-mineralizing step (3). Furthermore, other alkali metals, alkali earth metals, as well as nickel and other transition metals can be removed.

The halogen compound used in gas phase demineralization is not particularly limited. Examples can include fluorine, chlorine, bromine, iodine, hydrogen fluoride, hydrogen chloride, hydrogen bromide, hydrogen iodide, chlorine fluoride (ClF), iodine chloride (ICl), iodine bromine (IBr), bromine chloride (BrCl), and the like, compounds where halogen compounds thereof are generated by thermolysis, and mixed compounds thereof, but hydrogen chloride is preferable.

Furthermore, the halogen compound may be used by mixing with an inert gas, and the inert gas to be mixed is not particularly limited so long as the gas does not react with the carbonaceous material at the aforementioned treating temperature. Examples include nitrogen, helium, argon, krypton, and mixed gases thereof, but nitrogen is preferable.

In gas phase de-mineralization, a mixing ratio of the inert gas and halogen compound is not limited so long as sufficient de-mineralization is achieved, and the amount of the halogen compound with regard to the inert gas is preferably from 0.05 to 10.0 vol.%, more preferably from 0.1 to 5.0 vol.%, and even more preferably from 0.2 to 3.0 vol.%.

The gas phase de-mineralizing temperature is from 500°C to 1250°C, preferably from 600°C to 1100°C, more preferably from 700°C to 1000°C, and even more preferably from 800°C to 950°C. When the temperature is lower than 500°C, de-mineralization efficiency may be reduced and thus de-mineralization may not be sufficient, but when the temperature exceeds 1250°C, activation due to the halogen compound may occur.

Furthermore, the gas demineralizing time is not particularly limited, but is preferably from 5 minutes to 300 minutes, more preferably from 10 minutes to 200 minutes, and even more preferably from 20 minutes to 150 minutes.

For the gas phase de-mineralizing temperature, time, and the like, de-mineralization proceeds as the temperature increases and the time increases. Therefore, gas phase de-mineralization is preferably performed at a temperature and time where a potassium content of 0.1 wt.% or less is achieved.

One purpose of the gas phase de-mineralizing step (3) in the present invention is a step of removing potassium, iron, and the like included in the plant-derived char. The potassium content after the gas phase de-mineralizing step (3) is preferably 0.10 mass% or less, more preferably 0.05 mass% or less, and even more preferably 0.03 mass% or less. This is because when the potassium content exceeds 0.10 mass%, not only does dedoping capacity decrease and irreversible capacity increase in a non-aqueous electrolyte secondary battery using the obtained carbonaceous material for a negative electrode, but short-circuiting occurs due to these metal elements eluting and reprecipitating in the electrolyte solution, which leads to significant safety problems.

The mechanism of efficiently removing potassium, other alkali metals, alkali earth metals, transition metals, and the like by the gas phase de-mineralization of the manufacturing method of the present invention is not clear, but is thought to be as described below. A halogen compound is diffused in an organic material such that the metal such as potassium or the like included in the plant-derived char becomes a chloride or bromide in the organic material for example. Furthermore, the produced bromide or chloride is volatilized (dissipated) by heating, and thereby, potassium, iron, and the like are thought to be de-mineralizable. The mechanism is thought to be able to efficiently remove potassium and iron as compared to liquid phase de-mineralization, but the present invention is not limited to the aforementioned description.

A device used in gas phase de-mineralization is not limited so long as the plant-derived char and mixed gas of the inert gas and halogen compound can be heated while mixing, and for example, demineralization can be performed by a continuous or batch in-layer circulation method based on a fluidized bed or the like using a fluidizing furnace. The amount of the mixed gas supplied (circulated amount) is not limited, but is 1 mL/min or greater, preferably 5 mL/min or greater, and even more preferably 10 mL/min or greater, per 1 g of the plant-derived char.

In the gas phase de-mineralization, after heat treating in an inert gas atmosphere containing halogen compound (hereinafter, may be referred to as a "halogen heat treatment"), heat treating in the absence of a halogen compound (hereinafter, may be referred to as "heat treatment in the absence of halogen") is preferably further performed. A halogen is included in a carbon precursor by the halogen heat treatment, and therefore, the halogen included in the carbon precursor is preferably removed by heat treating in the absence of halogen. Specifically, the heat treatment in the absence of halogen is performed by heat treating at 500°C to 1250°C in an inert gas atmosphere not containing a halogen compound, but is preferably performed at the same heat treating temperature as the initial heat treating temperature or at a higher temperature. For example, after the halogen heat treatment, heat treatment is performed after blocking the supply of the halogen compound such that halogen can be removed. Furthermore, the time for the heat treatment in the absence of halogen is also not particularly limited, but is preferably from 5 minutes to 300 minutes, more preferably from 10 minutes to 200 minutes, and even more preferably from 10 minutes to 100 minutes.

Pulverizing step (4)

The pulverizing step (4) is a step of pulverizing the carbonaceous material precursor obtained by gas phase de-mineralizing. Specifically, the carbonaceous material precursor is pulverized such that the average particle size is from 1 to 50 μm. Pulverization can also be performed after carbonization (after main firing), but when the carbonization reaction progresses, the carbon precursor hardens, and therefore, the particle size distribution by pulverizing is difficult to control, and thus the pulverizing step is preferably performed after the gas phase de-mineralizing step and before the main firing step. The pulverizer used for pulverizing is not particularly limited, and a jet mill, rod mill, vibratory ball mill, or hammer mill can be used for example, but a jet mill provided with a classifier is preferable.

Main firing step (5)

The main firing step (5) is a step of main firing the pulverized carbonaceous material precursor at 800°C to 1600°C in a non-oxidizing gas atmosphere. The main firing step (5) in the manufacturing method of the present invention can be performed in accordance with normal procedures for main firing. The main firing temperature is from 800 to 1500°C. A lower limit of the main firing temperature in the present invention is 800°C or higher, more preferably 1000°C or higher, even more preferably 1100°C or higher, and particularly preferably 1150°C or higher. When the heat treating temperature too low, carbonization may be insufficient and thus irreversible capacity may increase. Furthermore, the heat treating temperature is increased such that alkali metals can be volatilized and removed from the carbonaceous material. In other words, a large amount of functional groups may remain in the carbonaceous material, the value of H/C may increase, and irreversible capacity may increase due to a reaction with lithium. On the other hand, an upper limit of the main firing temperature in the present invention is 1500°C or lower, more preferably 1400°C or lower, and particularly 1300°C or lower. In a case where the main firing temperature exceeds 1500°C, cavities formed as lithium storage sites may be reduced, and doping and dedoping capacity may be reduced. In other words, selective orientation of carbon hexagonal planes may increase, and discharge capacity may be reduced.

Main firing is preferably performed in a non-oxidizing gas atmosphere. Examples of non-oxidizing gases include helium, nitrogen, argon, and the like, and these may be used independently or as a mixture. Main firing may also be performed in a gas atmosphere in which a halogen gas such as chlorine or the like is mixed with the non-oxidizing gas described above. Furthermore, main firing can be performed under reduced pressure at a pressure of 10 kPa or lower for example. The main firing time is not particularly limited, but main firing can be performed for 0.05 to 10 hours, preferably for 0.05 to 8 hours, and more preferably for 0.05 to 6 hours, for example.

Coating step (6)

The coating step (6) is a step of coating the fired material with pyrolytic carbon. Coating with pyrolytic carbon can be performed using a CVD method. Specifically, a fired material is brought into contact with a straight-chain or cyclic hydrocarbon gas, and carbon purified by thermolysis is vapor deposited onto the fired material. The method is well known as a so-called chemical vapor deposition method (CVD method). The specific surface area of the obtained carbonaceous material can be controlled by the coating step using pyrolytic carbon. The pyrolytic carbon used in the present invention is not limited so long as the pyolytic carbon can be added as a hydrocarbon gas and can reduce the specific surface area of the carbonaceous material. The hydrocarbon gas is preferably mixed with a non-oxidizing gas and brought into contact with the carbonaceous material.

The number of carbon atoms of the hydrocarbon is not limited, but is preferably from 1 to 25, more preferably from 1 to 20, even more preferably from 1 to 15, and most preferably from 1 to 10.

The carbon source of the hydrocarbon gas is also not limited, and examples can include methane, ethane, propane, butane, pentane, hexane, octane, nonane, decane, ethylene, propylene, butene, pentene, hexene, acetylene, cyclopentane, cyclohexane, cycloheptane, cyclooctane, cyclononane, cyclopropene, cyclopentene, cyclohexene, cycloheptene, cyclooctene, decalin, norbornene, methylcyclohexane, norbornadiene, benzene, toluene, xylene, mesitylene, cumene, butylbenzene, and styrene. Furthermore, a hydrocarbon gas produced by heating a gaseous organic substance and a solid or liquid organic substance can also be used as the carbon source of the hydrocarbon gas.

Furthermore, a volatile organic compound that is solid at ambient temperature and with a residual carbon ratio that is less than 5 wt.% when ignited at 800°C can be used as the carbon source of the pyrolytic carbon to be coated. The pyrolytic carbon can be coated on the carbonaceous material by mixing the volatile organic compound with the carbonaceous material, and heat treating in the presence of a non-oxidizing gas.

In the present invention, the volatile organic compound that can be used is not particularly limited so long as the volatile organic compound is solid at ambient temperature and has a residual carbon ratio less than 5 wt.% when incinerated at 800°C (hereinafter, referred to as volatile organic compound), but is preferably a compound that generates a volatile substance (volatile organic material) (for example, hydrocarbon gas or tar) that can reduce the specific surface area of the carbonaceous material manufactured by the plant-derived char. In the volatile organic compound used in the present invention, the content of a volatile substrate (for example, hydrocarbon gas or tar component) that can reduce a specific surface area is not particularly limited, but a lower limit is preferably 95 wt.% or greater, and an upper limit is not particularly limited. Note that in the present specification, ambient temperature refers to 25°C.

Examples of the volatile organic material include thermoplastic resins and low molecular weight organic compounds. More specifically, examples of the thermoplastic resins can include polystyrene, polyethylene, polypropylene, poly(meth)acrylic acid, poly(meth)acrylic acid esters, and the like, and examples of the low molecular weight organic compound can include naphthalane, phenanthrene, anthracene, pyrene, and the like. In the present specification, poly(meth)acrylic acid refers to a polyacrylic acid, polymethacrylic acid, or mixture thereof. Furthermore, in the present specification, poly(meth)acrylic acid ester refers to a polyacrylic acid ester, polymethacrylic acid ester, or mixture thereof.

Note that in the present specification, the residual carbon ratio is measured by determining the amount of carbon in ignited residue after igniting a sample in the inert gas. For igniting, approximately 1 g (this precise weight is set as $W_1(g)$) of a volatile organic material is placed in a crucible, the crucible is increased in temperature to 800°C at 10°C/min in an electric furnace while flowing 20 liters of nitrogen for 1 minute, and then ignited for one hour at 800°C. Residual material at this time is set as ignited residue, and the weight thereof is set as $W_1(g)$.

Next, elemental analysis is performed on the aforementioned ignited residue, in accordance with a method stipulated in JIS M8819, and a carbon weight percentage $P_1(\%)$ is measured. A residual carbon ratio $P_2(\%)$ is calculated by the following equation.

$$\text{(Equation 1)}$$

$$P_2 = P_1 \times \frac{W_2}{W_1}$$

The mixed amount of the volatile organic compound with regard to the carbonaceous material is not particularly limited so long as the effect of the present invention can be achieved. For example, the added amount of the volatile organic material with regard to 100 parts by weight of the carbonaceous material is preferably 3 parts by weight or greater, more preferably 5 parts by weight or greater, and even more preferably 7 parts by weight or greater. An upper limit of the added amount of the volatile organic material with regard to 100 parts by weight of the carbonaceous material is not particularly limited, but is preferably 1000 parts by weight or less.

The contact or heat treating temperature is not limited, but is preferably 600 to 1000°C, more preferably 650 to 1000°C, and even more preferably 700 to 950°C. The contact or heat treating time is also not particularly limited, but is preferably from 10 minutes to 5.0 hours, and more preferably from 15 minutes to 3 hours. However, the preferable contact or heat treating time differs based on the coated carbonaceous material, and the specific surface area of the obtained carbonaceous material can basically be reduced as the contact time increases. In other words, the coating step is preferably performed under a condition where the specific surface area of the obtained carbonaceous material is 30 $m^2$/g or less.

Furthermore, the device used for coating is not limited, but coating can be performed by a continuous or batch in-layer circulation method by a fluidized bed or the like, using a fluidizing furnace. The amount of gas supplied (circulated amount) is also not limited. Nitrogen or argon can be used as the non-oxidizing gas. The amount of the hydrocarbon gas added to the non-oxidizing gas is preferably from 0.1 to 50 vol.%, more preferably 0.5 to 25 vol.%, and even more preferably 1 to 15 vol.%, for example.

Implementing main firing step (5) and coating step (6) as one step

The main firing step (5) and coating step (6) can be performed in one step by using the volatile organic compound. Specifically, the pulverized carbonaceous material precursor and volatile organic compound are mixed and then main fired at 800°C to 1600°C in a non-oxidizing gas atmosphere, and therefore, the main firing step (5) and coating step (6) can be performed in one step.

In a case where the main firing step (5) and coating step (6) are performed in one step, the volatile organic compound is used and the carbonaceous material precursor and volatile organic compound are mixed at the aforementioned ratio. The obtained mixture can be fired under the firing conditions of the main firing step (5) to obtain the carbonaceous material of the present invention.

Reheat treating step (7)

The manufacturing method of the present invention preferably includes a reheat treating step (7). The reheat treating step is a step for carbonizing the pyrolytic carbon coated on the surface by the coating step (6). In the reheat treating step (7), heat treatment is performed at 800°C to 1500°C in a non-oxidizing gas atmosphere. A lower limit of a temperature in the reheat treating step is 800°C or higher, more preferably 1000°C or higher, even more preferably 1100°C, and particularly preferably 1150°C or higher. An upper limit of a temperature of the reheat treating step is 1500°C or lower, more preferably 1400°C or lower, and particularly preferably 1300°C or lower.

The reheat treating step is preferably performed in a non-oxidizing gas atmosphere. Examples of non-oxidizing gases include helium, nitrogen, argon, and the like, and these may be used independently or as a mixture. Main firing may also be performed in a gas atmosphere in which a halogen gas such as chlorine or the like is mixed with the non-oxidizing gas described above. Furthermore, reheat treating can be performed under reduced pressure at a pressure of 10 kPa or lower for example. The reheat treating time is not particularly limited, but main firing can be performed for 0.1 to 10 hours, preferably for 0.3 to 8 hours, and more preferably for 0.4 to 6 hours, for example.

Examples

The present invention will be described in detail hereinafter using examples, but these examples do not limit the scope of the present invention.

Note that measurement methods of physical properties ("atomic ratio H/C of "hydrogen/carbon", "potassium content", "helium true density", "butanol true density", "average particle size", "specific surface area", "press specific surface area ratio", "NMR spectrum of lithium nucleus") of the carbonaceous material and a measurement method of "electrode density" of a negative electrode are described below, but the physical property values described in the present specification including the Examples are based on values determined by the following methods.

Atomic ratio (H/C) of hydrogen atoms and carbon atoms

The atomic ratio was measured in accordance with a method stipulated in JIS M8819. The ratio of the number of hydrogen/carbon atoms was determined from a mass ratio of hydrogens and carbons in a sample obtained by elemental analysis using a CHN analyzer.

Potassium content

In order to measure the potassium element content, a carbon sample containing a predetermined potassium element was prepared in advance, and then a calibration curve related to a relationship with an intensity of K$\alpha$ line of potassium was created using an X-ray fluorescence analyzing device. Next, the intensity of the K$\alpha$ line of potassium according to the X-ray fluorescence analysis was measured for the sample, and the potassium content was determined by the precreated calibration curve. The X-ray fluorescence analysis was performed using LAB CENTER XRF-1700, available from Shimadzu Corporation, under the following conditions. An upper irradiating-type holder was used, and the measured surface area of the sample was set within a circumference having diameter of 20 mm. In order to place the sample to be measured, 0.5 g of the sample to be measured was placed in a polyethylene container with a 25 mm inner diameter, a back side thereof was held by a plankton net, a measurement surface was covered by a polypropylene film, and then measurements were performed. The X-ray source was set to 40 kV and 60 mA. Potassium was measured using an LiF(200) as an analyzing crystal and a gas flow proportional counter as a detector, in a range where 2$\theta$ is from 90 to 140° at a scanning rate of 8°/min. Iron was measured using an LiF(200) as an analyzing crystal and a scintillation counter as a detector, in a range where 2$\theta$ is from 56 to 60°, at a scanning rate of 8°/min.

Helium true density

Measurement of the true density $P_{He}$ using helium as a substitution medium was performed after vacuum-drying a sample for 12 hours at 200°C using a multivolume pycnometer (Acupic 1330) available from Micromeritics. The ambient temperature at the time of measurement was constant at 25°C. The pressure in this measurement method is a gauge pressure in each case and is a pressure determined by subtracting an ambient pressure from an absolute pressure.

The multivolume pycnometer manufactured by Micromeritics as a measuring device is provided with a sample chamber and an expansion chamber, and the sample chamber has a pressure gauge for measuring the pressure inside the chamber. The sample chamber and the expansion chamber are connected by a connecting tube provided with a valve. A helium gas introducing tube provided with a stop valve is connected to the sample chamber, and a helium gas discharging tube provided with a stop valve is connected to the expansion chamber.

Measurements were performed as follows. The volume of the sample chamber ($V_{CELL}$) and the volume of the expansion chamber ($V_{EXP}$) were measured in advance using standard spheres. A sample was placed in the sample chamber, helium gas was flowed for 2 hours through the helium gas introducing tube of the sample chamber, the connecting tube, and the helium gas discharging tube of the expansion chamber, and then the inside of the device was substituted with helium gas. Next, the valve between the sample chamber and the expansion chamber and the valve of the helium gas discharging tube from the expansion chamber were closed (such that helium gas at the same pressure as the ambient pressure remained in the expansion chamber), helium gas was introduced from the helium gas introducing tube of the sample chamber until the pressure reached 134 kPa, and then the stop valve of the helium gas introducing tube was closed. The pressure ($P_1$) of the sample chamber 5 minutes after the stop valve was closed was measured. Next, the valve between the sample chamber and the expansion chamber was opened so as to transfer helium gas to the expansion chamber, and then the pressure ($P_2$) at this time was measured. The volume of the sample ($V_{SAMP}$) was calculated by the following equation.

$$V_{SAMP} = V_{CELL} - V_{EXP}/[(P_1/P_2) - 1]$$

Therefore, when the weight of sample is set as $W_{SAMP}$, the helium true density is set as

$$\rho_{He} = W_{SAMP}/V_{SAMP}$$

The equilibrium speed was set to 0.010 psig/min.

Butanol true density

Measurements were performed using butanol in accordance with a method stipulated in JIS R7212. A summary is given below. Note that both the carbonaceous material precursor and carbonaceous material were measured using the same measurement methods. The mass ($m_1$) of a pycnometer with a bypass having an internal volume of approximately 40 mL is precisely measured. Next, after a sample is placed flat at a bottom portion thereof such that the thickness of the sample is approximately 10 mm, the mass ($m_2$) is precisely measured. 1-butanol is gently added thereto to a depth of approximately 20 mm from the bottom. Next, the pycnometer is gently oscillated, and after confirming that no large air bubbles are formed, the pycnometer is placed in a vacuum desiccator and gradually evacuated to a pressure of from 2.0 to 2.7 kPa. The pressure is maintained for 20 minutes or longer, the generation of air bubbles stops, and then the pycnometer is removed and further filled with 1-butanol. A stopper is inserted, the pycnometer is immersed in a constant-temperature bath (adjusted to 30 ± 0.03°C) for at least 15 minutes, and then the liquid surface of 1-butanol is aligned with the marked line. Next, the pycnometer is removed, the outside is thoroughly wiped, and the pycnometer is cooled to room temperature, and then the mass ($m_4$) is precisely measured. Next, the same pycnometer is filled only with 1-butanol immersed in a constant-temperature water bath in the same manner as described above, the marked line is aligned, and then the mass ($m_3$) is measured. Furthermore, distilled water boiled immediately before use and where dissolved gas was removed is placed in the pycnometer and immersed in a constant-temperature water bath in the same manner as described above, the marked line is aligned, and then the mass ($m_5$) is measured. The true density ($\rho_{Bt}$) is calculated using the following equation.

(Equation 2)

$$\rho_{Bt} = \frac{m_2 - m_1}{m_2 - m_1 - (m_4 - m_3)} \times \frac{m_3 - m_1}{m_5 - m_1} d$$

(Where d represents specific gravity (0.9946) in water at 30°C)

Average Particle Size

Three drops of a dispersant (cationic surfactant, "SN-WET 366" (available from San Nopco Limited)) are added to approximately 0.1 g of a sample, and the dispersant is blended into the sample. Next, after adding 30 mL purified water and dispersing for approximately 2 minutes using an ultrasonic cleaning machine, the particle size distribution in a particle size range of 0.02 to 2,000 $\mu$m is determined using a particle size distribution analyzer ("Microtrac MT3300EX II" available from MicrotracBEL Corp.). The average particle size $D_{v50}$ ($\mu$m) was determined from the obtained particle size distribution as the particle size with a cumulative volume of 50%.

Specific surface area

The specific surface area was measured in accordance with a method stipulated in JIS Z8830. A summary is given below.
Approximation equation derived from a BET equation:

$$[Equation\ 3]$$

$$v_m = 1/(v(1-x))$$

A value of $v_m$ is determined by a one-point method (relative pressure x = 0.2) based on nitrogen adsorption at the temperature of liquid nitrogen using the aforementioned equation, and a specific surface area of the sample is calculated by the following equation: specific surface area = $4.35 \times v_m$($m^2$/g) (Where $v_m$ represents an adsorption amount ($cm^3$/g) required for forming a monolayer in the sample surface, v represents an actually measured adsorption amount ($cm^3$/g), and x represents a relative pressure) Specifically, the adsorption amount of nitrogen in the carbonaceous materials at the liquid nitrogen temperature is measured as follows, using "MONOSORB" available from Quantachrome Instruments Japan.
A sample tube is filled with the carbonaceous material, and the sample tube is cooled to - 196°C while flowing helium gas containing nitrogen gas at a concentration of 20 mol% such that the nitrogen is adsorbed in the carbonaceous material. The sample tube is returned to room temperature. The amount of nitrogen desorbed from the sample at this time is measured by a thermal conductivity detector and set as an adsorbed gas amount v.

Press specific surface ratio

The press specific surface area ratio can be determined by the following equation based on filling a cylindrical mold having a diameter of 10 mm with 0.5 g of the carbonaceous material, measuring the specific surface area (A) determined by a BET method when pressing at 2.6 MPa (1 tf/$cm^2$), and from the specific surface area (B) before pressing.

$$Press\ specific\ surface\ area = (A)/(B)$$

The specific surface area is measured in accordance with the method described in the aforementioned "Specific surface area". Furthermore, the carbonaceous material pressed at 2.6 MPa was prepared by filling 0.5 g of the carbonaceous material into a cylindrical mold with a 10 mm diameter and then pressing at 2.6 MPa (1 tf/$cm^2$).

NMR spectrum of lithium nucleus

N-methyl-2-pyrrolidone was added to 90 parts by weight of a carbonaceous material powder and 10 parts by weight of polyvinylidene fluoride (KF#1100 available from Kureha Corporation) to form into a paste, uniformly applied on a copper foil, dried, and then the peeled from the copper foil to obtain a carbon electrode (positive electrode). Note that the amount of the carbonaceous material in the positive electrode was adjusted to approximately 20 mg. A metal lithium thin plate with a thickness of 1 mm was used in the lithium negative electrode.
A non-aqueous solvent-based lithium secondary battery was formed by using the obtained carbon electrode (positive electrode) and the lithium negative electrode, using a substance where LiPF$_6$ is added at a ratio of 1.4 mol/liter to a mixed solvent prepared by mixing ethylene carbonate, dimethylcarbonate, and ethyl methylcarbonate at a volume ratio of 1:2:2 as an electrolyte solution, and using a polypropylene fine porous membrane as a separator, and by charging for one hour at a current density of 0.50 mA/$cm^2$. An operation of stopping for two hours after charging for one hour at a density of 0.50 mA/cm$^2$ was repeated, and then the carbonaceous material was doped with lithium until an equilibrium potential between terminals of 4 mV as achieved. After doping is completed, the operation is stopped for two hours, and then the carbon electrode is removed in an argon atmosphere, and a sample tube for NMR measurement is filled with two of the entire carbon electrodes (positive electrodes) (40 mg) from which the electrolyte solution was wiped. NMR analysis was performed by MAS-$^7$Li-NMR measurement using a AVANCE-400 available from BRUKER. At the time of measurement, LiCl was measured as a reference substance, and this was set to 0 ppm. The measurement temperature was 26°C.

Example 1

After a sodium hydroxide (NaOH) aqueous solution was added and impregnated into a coconut husk char (dry distilled at 500°C) with a particle size of 200 $\mu$m in a nitrogen atmosphere, this was decompressed and heat dehydrated to obtain a carbonaceous material precursor impregnated with 7.0 wt.% of NaOH with regard to the coconut husk char. Next, after 10 g of the carbonaceous material precursor impregnated with NaOH was heat treated at 800°C in a nitrogen atmosphere, nitrogen gas flowing into a reaction tube is replaced by a mixed gas of chlorine gas and nitrogen gas, and then retained for one hour at 860°C. Next, the flow of chlorine gas was stopped and this condition was retained for 30 minutes in a nitrogen gas atmosphere to obtain coconut husk fired charcoal. 200 g of the obtained coconut husk pulverized charcoal was pulverized for 20 minutes by a jet mill (AIR JET MILL available from Hosokawa Micron Co., Ltd.; MODEL 100AFG) to obtain a pulverized carbonaceous material precursor with an average particle size of 18 to 23 $\mu$m. The pulverized carbonaceous material precursor was heated to 1200°C at a heating rate of 250°C/h, retained for one hour at 1200°C, and subjected to main firing to obtain fired charcoal. Note that main firing was performed in a nitrogen atmosphere with a flow rate of 10 L/min. 5 g of the obtained fired charcoal was placed in a quartz reaction tube and heated and retained at 780°C under a nitrogen gas air flow, and then the fired charcoal was coated with pyrolytic carbon by replacing the nitrogen gas flowing into the reaction tube with a mixed gas of hexane and nitrogen gas. The infusion rate of the hexane was 0.3 g/min, and after infusing for 50 minutes, the supply of hexane was stopped. After the gas inside the reaction tube was replaced with nitrogen, the sample was allowed to cool to obtain a carbonaceous material 1.

Example 2

A carbonaceous material 2 was obtained in the same manner as in Example 1, other than the impregnation amount of NaOH was changed to 15%.

Example 3

A carbonaceous material 3 was obtained in the same manner as in Example 1, other than the impregnation amount of NaOH was changed to 18%.

Example 4

A carbonaceous material 4 was obtained in the same manner as in Example 1, other than the impregnation amount of NaOH was changed to 20%.

Example 5

3000 g of 1% hydrochloric acid was added to 1000 g of coffee residue after extracting, stirred for 10 minutes at room temperature, and then filtered. Next, a water-washing operation of adding 3000 g of water, stirring for 10 minutes, and then filtering was repeated three times to perform a de-mineralizing treatment so as to obtain a de-mineralized coffee extraction residue. After the obtained de-mineralized coffee extraction residue is dried in a nitrogen gas atmosphere, preliminary firing is performed at 400°C to obtain a coffee char. After the coffee char was pulverized to a particle size of 20 $\mu$m by a rod mill and a sodium hydroxide (NaOH) aqueous solution was added and impregnated, the char was heat dehydrated at 120°C to obtain a carbonaceous material precursor impregnated with 15.0 wt.% of NaOH with regard to the coffee char. Next, after 10 g of the carbonaceous material precursor impregnated with NaOH was heat treated at 800°C in a nitrogen atmosphere, nitrogen gas flowing into a reaction tube is replaced by a mixed gas of chlorine gas and nitrogen gas, and then retained for one hour at 860°C. Next, the flow of chlorine gas was stopped and this condition was retained for 30 minutes in a nitrogen gas atmosphere to obtain a carbonaceous material precursor. The carbonaceous material precursor was heated to 1200°C at a heating rate of 250°C/h, retained for one hour at 1200°C, and subjected to main firing to obtain fired charcoal. Note that main firing was performed in a nitrogen atmosphere with a flow rate of 10 L/min. 5 g of the obtained fired charcoal was placed in a quartz reaction tube and heated and retained at 780°C under a nitrogen gas air flow, and then the fired charcoal was coated with pyrolytic carbon by replacing the nitrogen gas flowing into the reaction tube with a mixed gas of hexane and nitrogen gas. The infusion rate of the hexane was 0.3 g/min, and after infusing for 50 minutes, the supply of hexane was stopped. After the gas inside the reaction tube was replaced with nitrogen, the sample was allowed to cool to obtain a carbonaceous material 5.

Example 6

A carbonaceous material 6 was obtained in the same manner as Example 4, other than the 5 g of fired charcoal and 15 g of polystyrene were mixed and 20 g thereof were placed in a quartz reaction tube and retained for 30 minutes at 780°C under a nitrogen gas flow of 0.1 L/min, in place of coating a pyrolytic carbon onto the fired charcoal using hexane.

Comparative Example 1

A carbonaceous material 7 was obtained in the same manner as Example 1, except that the alkali impregnating step was not performed.

Comparative Example 2

A carbonaceous material 8 was obtained in the same manner as in Example 1, except that the impregnation amount of NaOH was changed to 50%.

Comparative Example 3

A carbonaceous material 9 was obtained in the same manner as Example 1, except that coating with a pyrolytic carbon was not performed after main firing.
Non-aqueous electrolyte secondary batteries were prepared by the following operations (a) to (c) using the electrodes obtained in the Examples and Comparative Examples, and the electrode and battery performances thereof were evaluated.

(a) Preparation of electrode

NMP was added to 90 parts by weight of the carbonaceous material and 10 parts by weight of polyvinylidene fluoride (KF#1100, available from Kureha Corporation), formed into a paste, and then applied uniformly onto a copper foil. After drying, the sample was punched into a disc shape with a diameter of 15 mm from the copper foil, and then pressed to obtain an electrode. Note that the amount of the carbon material in the electrode was adjusted to approximately 20 mg.

(b) Preparation of test battery

The carbon material of the present invention is suitable for forming a negative electrode for a non-aqueous electrolyte secondary battery, but in order to accurately evaluate the discharge capacity (dedoping capacity) and irreversible capacity (dededoping capacity) of a battery active material without being affected by fluctuation in the performance of a counter electrode, a lithium secondary battery was formed using the electrode obtained above and using lithium metal with stable characteristics as a counter electrode, and the characteristics thereof were evaluated.
The lithium electrode was prepared inside a glove box in an Ar atmosphere. An electrode (counter electrode) was formed by spot-welding a stainless steel mesh disc with a diameter of 16 mm on an outer lid of a 2016-size coin-type battery in advance, punching a thin sheet of metal lithium with a thickness of 0.8 mm into a disc shape with a diameter of 15 mm, and pressing the thin sheet of metal lithium into the stainless steel mesh disc.
Using a pair of the electrodes manufactured thereby, $LiPF_6$ was added at a ratio of 1.4 mol/L to a mixed solvent prepared by mixing ethylene carbonate, dimethylcarbonate, and methyl ethylcarbonate at a volume ratio of 1:2:2 as an electrolyte solution. A polyethylene gasket was used as a fine porous membrane separator made of borosilicate glass fibers with a diameter of 19 mm to assemble a 2016-size coin-type non-aqueous electrolyte lithium secondary battery in an Ar glove box.

(c) Measurement of battery capacity

A charge-discharge test was performed on the lithium secondary battery with the aforementioned configuration using a charge-discharge tester ("TOSCAT" available from Toyo System Co., Ltd.). A doping reaction of lithium into the carbon electrode was performed with a constant-current/constant-voltage method, and a dedoping reaction was performed by a constant-current method. Herein, in a battery using a lithium chalcogen compound in the positive electrode, the doping reaction of lithium into the carbon electrode is referred to as "charging", and in a battery using lithium metal in a counter electrode as with the test battery of the present invention, the doping reaction into the carbon electrode is referred to as "discharging". The manner in which the doping reactions of lithium into the same carbon electrode differs based on the pair of electrodes used. Therefore, the doping reaction of lithium into the carbon electrode will be described hereinafter as "charging" for the sake of convenience. Conversely, "discharging" refers to a charging reaction in the test battery but is a dedoping reaction of lithium from the carbon material, and therefore is described as "discharging" for the sake of convenience. The charging method used herein is a constant-current/constant-voltage method. Specifically, constant-current charging was performed at 0.50 mA/cm$^2$ until the terminal voltage reached 0 mV, and after the terminal voltage reached 0 mV, constant-voltage charging was performed at a terminal voltage of 0 mV, and charging was continued until the current value reached 20 $\mu$A. At this time, a value determined by dividing the amount of electricity supplied by the weight of the carbon material of the electrode is defined as charge capacity per unit weight of the carbon material (Ah/kg). After completing charging, the battery circuit was opened for 30 minutes, and then discharging was performed. Discharging was performed at a constant current of 0.50 mA/cm$^2$ until the final voltage reached 1.5 V. At this time, a value determined by dividing the amount of discharged electricity by the weight of the carbon material of the electrode is defined as discharge capacity per unit weight of the carbon material (Ah/kg). Furthermore, the product of the discharge capacity per unit weight and the electrode density was used as the discharge capacity per unit volume (Ah/L). Furthermore, the charge/discharge efficiency was determined by dividing the discharge capacity per unit weight by the charge capacity per unit weight. The charge/discharge efficiency was recorded as a percentage (%). The charge/discharge capacity and charge/discharge efficiency were calculated by averaging three measured values for test batteries prepared using the same sample.

[Table 1-1]

| | Raw material | H/C | Dv$_{50}$ ($\mu$m) | SSA (m$^2$/g) | SSA after pressing (m$^2$/g) | Press specific surface area |
|---|---|---|---|---|---|---|
| Example 1 | Coconut shells | 0.03 | 18.0 | 1.0 | 1.5 | 1.5 |
| Example 2 | Coconut shells | 0.03 | 18.4 | 1.4 | 2.4 | 2.0 |
| Example 3 | Coconut shells | 0.03 | 19.3 | 1.6 | 3.3 | 2.5 |
| Example 4 | Coconut shells | 0.03 | 23.6 | 1.2 | 3.9 | 3.3 |
| Example 5 | Coffee | 0.03 | 20.9 | 1.1 | 2.9 | 2.6 |
| Example 6 | Coconut shells | 0.03 | 17.9 | 1.9 | 6.5 | 3.4 |
| Comparative example 1 | Coconut shells | 0.06 | 18.6 | 8.1 | 9.4 | 1.2 |
| Comparative example 2 | Coconut shells | 0.03 | 18.1 | 1.1 | 20.0 | 18.2 |
| Comparative example 3 | Coconut shells | 0.02 | 19.2 | 74.9 | 120 | 1.6 |

[Table 1-2]

| | $\rho_{Bt}$ ([g/cm$^3$) | $\rho_{He}$ (g/cm$^3$) | $^7$LiNMR (ppm) | Potassium content (%) |
|---|---|---|---|---|
| Example 1 | 1.46 | 1.46 | 125 | 0.003 |
| Example 2 | 1.43 | 1.43 | 132 | 0.004 |
| Example 3 | 1.42 | 1.40 | 134 | 0.003 |

(continued)

|  | $\rho_{Bt}$ ([g/cm$^3$) | $\rho_{He}$ (g/cm$^3$) | $^7$LiNMR (ppm) | Potassium content (%) |
|---|---|---|---|---|
| Example 4 | 1.40 | 1.40 | 139 | 0.003 |
| Example 5 | 1.43 | 1.65 | 144 | 0.001 |
| Example 6 | 1.40 | 1.73 | 125 | 0.002 |
| Comparative example 1 | 1.48 | 2.09 | 100 | 0.049 |
| Comparative example 2 | 1.03 | 1.20 | - | 0.004 |
| Comparative example 3 | 1.40 | 2.14 | 92 | 0.003 |

[Table 2]

|  | Electrode density (g/cm$^3$) | Charge capacity (mAh/g) | Discharge capacity (mAh/g) | Irreversible capacity (mAh/g) | Efficiency (%) |
|---|---|---|---|---|---|
| Example 1 | 1.05 | 603 | 534 | 69 | 88.5 |
| Example 2 | 1.02 | 608 | 538 | 70 | 88.5 |
| Example 3 | 0.92 | 614 | 544 | 70 | 88.5 |
| Example 4 | 0.87 | 642 | 565 | 77 | 88.0 |
| Example 5 | 1.03 | 666 | 585 | 80 | 87.9 |
| Example 6 | 0.90 | 607 | 522 | 85 | 86.0 |
| Comparative example 1 | 1.01 | 507 | 422 | 85 | 83.2 |
| Comparative example 2 | - | - | - | - | - |
| Comparative example 3 | 0.93 | 631 | 410 | 221 | 65.0 |

As shown in Table 1 and Table 2, the carbonaceous materials of Examples 1 to 6, with a resonance peak shifted 110 to 160 ppm exhibited excellent discharge capacities of 522 to 585 mAh/g. Furthermore, excellent discharge capacities of 86.0 to 88.5% were exhibited. On the other hand, the carbonaceous material of Comparative Example 1 with a resonance peak shifted 100 ppm had a discharge capacity of 422 mAh/g and charge/discharge efficiency of 83.2%, and the carbonaceous material of Comparative Example 3 with a resonance peak shifted 92 ppm had a discharge capacity of 410 mAh/g and charge/discharge capacity of 65.0%. Furthermore, resonance peak measurement and a battery performance test were not performed for the carbonaceous material of Comparative Example 2 with a large NaOH impregnation amount.

Industrial Applicability

The non-aqueous electrolyte secondary battery of the present invention has high discharge capacity and excellent charge/discharge efficiency. Therefore, the battery can be suitably used in a hybrid electric vehicles (HEV), plug-in hybrid electric vehicle (PHEV), and electric vehicle (EV), where high input/output characteristics are required.

**Claims**

1. A method of manufacturing a carbonaceous material for a non-aqueous electrolyte secondary battery negative electrode, comprising:

   (1) an alkali impregnating step of adding 3.0 wt.% to 40.0 wt.% of a compound containing an alkali metal element to a plant-derived char to obtain a plant-derived char impregnated with alkali;

(2) a heat treating step of heat treating the plant-derived char impregnated with alkali at 500°C to 1000°C in a non-oxidizing gas atmosphere to obtain an alkali-treated carbonaceous material precursor;

(3) a gas phase de-mineralizing step of heat treating the alkali-treated carbonaceous material precursor at 500°C to 1250°C in an inert gas atmosphere containing a halogen compound;

(4) a step of pulverizing the carbonaceous material precursor obtained by gas phase de-mineralizing;

(5) a step of main firing the pulverized carbonaceous material precursor at 800°C to 1600°C in a non-oxidizing gas atmosphere; and

(6) a step of coating the fired material with pyrolytic carbon.

2. The method of manufacturing a carbonaceous material for a non-aqueous electrolyte secondary battery negative electrode according to claim 1, wherein the main firing step (5) and coating step (6) are performed by mixing the pulverized carbonaceous material precursor and a volatile organic compound that is solid at ambient temperature and having a residual carbon ratio that is less than 5 wt.% when ignited at 800°C, and then main firing at 800°C to 1600°C in a non-oxidizing gas atmosphere.

3. The method of manufacturing a carbonaceous material for a non-aqueous electrolyte secondary battery negative electrode according to claim 1 or 2, further comprising a step of heat treating at 800°C to 1500°C in a non-oxidizing gas atmosphere (7).

4. The method of manufacturing a carbonaceous material for a non-aqueous electrolyte secondary battery negative electrode according any one of claims 1 to 3, wherein an added amount of alkali in the plant-derived char impregnated with alkali is 5 wt.% or greater.

5. A carbonaceous material for a non-aqueous electrolyte secondary battery negative electrode, using a plant as a carbon source and obtainable by the method according to claim 1, wherein
potassium element content is 0.10 wt.% or less, true density determined by a pycnometer method using butanol is 1.35 to 1.50 g/cm$^3$, true density measured using helium as a substitution medium is 1.30 to 2.00 g/cm$^3$, lithium is electrochemically doped in the carbonaceous material, and in a case where an NMR spectrum of lithium nucleus is measured, a main resonance peak shifted 110 to 160 ppm to a lower magnetic field side is exhibited with regard to a resonance peak of LiCl as a reference substance.

6. The carbonaceous material for a non-aqueous electrolyte secondary battery negative electrode according to claim 5, wherein a press specific surface area ratio (A/B) of a specific surface area (A) determined by a BET method when the carbonaceous material is pressed at 2.6 MPa and a specific surface area (B) before pressing is 10 or less.

7. The carbonaceous material for a non-aqueous electrolyte secondary battery negative electrode according to claim 5 or 6, wherein a ratio of a hydrogen atom and carbon atom determined by elemental analysis is 0.10 or lower.

8. The carbonaceous material for a non-aqueous electrolyte secondary battery negative electrode according to any one of claims 5 to 7, wherein the true density determined by a pycnometer method using butanol is 1.35 to 1.46 g/cm$^3$.

9. A non-aqueous electrolyte secondary battery negative electrode, comprising the carbonaceous material according to any one of claims 5 to 8.

10. The non-aqueous electrolyte secondary battery negative electrode according to claim 9, wherein an electrode density is 0.80 g/cm$^3$ or higher.

11. A non-aqueous electrolyte secondary battery, comprising the negative electrode according to claim 9 or 10.

**Patentansprüche**

1. Verfahren zur Herstellung eines kohlenstoffhaltigen Materials für eine negative Elektrode einer Sekundärbatterie mit nicht-wässrigem Elektrolyten, umfassend:

(1) einen alkalischen Imprägnierungsschritt durch Zufügen von 3,0 Gew.-% bis 40,0 Gew.-% einer Verbindung, die ein Alkali-Metall-Element enthält, zu einer aus Pflanzen gewonnenen Holzkohle, um eine mit Alkali imprägnierte, aus Pflanzen gewonnene Holzkohle zu erhalten;

(2) einen Hitzebehandlungsschritt durch Hitzebehandlung der mit Alkali imprägnierten, aus Pflanzen gewonnenen Holzkohle bei 500°C bis 1000°C in einer nicht oxidierenden Gasatmosphäre, um ein mit Alkali behandelten Vorläufermaterial aus kohlenstoffhaltigem Material zu erhalten;

(3) einen Gasphasen-Demineralisierungsschritt durch Hitzebehandeln des mit Alkali behandelten Vorläufermaterials aus kohlenstoffhaltigem Material bei 500°C bis 1250°C in einer inerten Gasatmosphäre, die eine Halogenverbindung enthält;

(4) einen Schritt der Pulverisierung des Vorläufermaterials aus kohlenstoffhaltigem Material, erhalten durch Gasphasen-Demineralisierung;

(5) einen Schritt des Hauptbrennens des pulverisierten Vorläufermaterials aus kohlenstoffhaltigem Material bei 800°C bis 1600°C in einer nicht oxidierenden Gasatmosphäre; und

(6) einen Schritt des Beschichtens des gebrannten Materials mit pyrolytischem Kohlenstoff.

2.  Verfahren zur Herstellung eines kohlenstoffhaltigen Materials für eine negative Elektrode einer Sekundärbatterie mit nicht-wässrigem Elektrolyten nach Anspruch 1, wobei der Hauptbrennschritt (5) und der Beschichtungsschritt (6) durchgeführt werden durch Mischen des pulverisierten Vorläufermaterials aus kohlenstoffhaltigem Material und einer flüchtigen organischen Verbindung, die bei Umgebungstemperatur fest ist und einen Restkohlenstoffanteil von weniger als 5 Gew.-% aufweist bei Entzündung bei 800°C, und anschließendem Hauptbrennen bei 800°C bis 1600°C in einer nicht oxidierenden Gasatmosphäre.

3.  Verfahren zur Herstellung eines kohlenstoffhaltigen Materials für eine negative Elektrode einer Sekundärbatterie mit nicht-wässrigem Elektrolyten nach einem der Ansprüche 1 oder 2, weiterhin umfassend einen Hitzebehandlungsschritt bei 800°C bis 1500°C in einer nicht oxidierenden Gasatmosphäre (7).

4.  Verfahren zur Herstellung eines kohlenstoffhaltigen Materials für eine negative Elektrode einer Sekundärbatterie mit nicht-wässrigem Elektrolyten nach einem der Ansprüche 1 bis 3, wobei eine zugegebene Alkalimenge in der mit Alkali imprägnierten, aus Pflanzen gewonnenen Holzkohle 5 Gew.-% oder mehr beträgt.

5.  Kohlenstoffhaltiges Material für eine negative Elektrode einer Sekundärbatterie mit nicht-wässrigem Elektrolyten, unter Verwendung einer Pflanze als Kohlenstoffquelle und erhältlich durch das Verfahren nach Anspruch 1, wobei der Gehalt am Element Kalium 0,10 Gew.-% oder weniger beträgt, die Reindichte, bestimmt durch eine Pyknometermethode unter Verwendung von Butanol, 1,35 bis 1,50 g/cm$^3$ beträgt, die Reindichte, gemessen unter Verwendung von Helium als Ersatzmedium, 1,30 bis 2,00 g/cm$^3$ beträgt, Lithium im kohlenstoffhaltigen Material elektrochemisch dotiert ist und, in einem Fall, in dem ein MNR-Spektrum eines Lithiumkerns gemessen wird, ein Haupt-Resonanz-Peak, der 110 bis 160 ppm zu einer Seite mit geringerem magnetischen Feld verschoben ist, mit Bezug auf einen Resonanz-Peak von LiCl als Referenzsubstanz gezeigt wird.

6.  Kohlenstoffhaltiges Material für eine negative Elektrode einer Sekundärbatterie mit nicht-wässrigem Elektrolyten nach Anspruch 5, wobei ein pressspezifisches Oberflächenverhältnis (A/B) eines bestimmten Oberflächenbereichs (A), bestimmt durch eine BET-Methode, wenn das kohlenstoffhaltige Material bei 2,6 MPa gepresst wird, zu einem bestimmten Oberflächenbereich (B) vor dem Pressen 10 oder weniger beträgt.

7.  Kohlenstoffhaltiges Material für eine negative Elektrode einer Sekundärbatterie mit nicht-wässrigem Elektrolyten nach Anspruch 5 oder 6, wobei ein Verhältnis eines Wasserstoffatoms und einem Kohlenstoffatom, bestimmt durch Elementaranalyse, 0,10 oder weniger beträgt.

8.  Kohlenstoffhaltiges Material für eine negative Elektrode einer Sekundärbatterie mit nicht-wässrigem Elektrolyten nach einem der Ansprüche 5 bis 7, wobei die Reindichte, bestimmt durch eine Pyknometermethode unter Verwendung von Butanol, 1,35 bis 1,46 g/cm$^3$ beträgt.

9.  Negative Elektrode einer Sekundärbatterie mit nicht-wässrigem Elektrolyten, enthaltend das kohlenstoffhaltige Material nach einem der Ansprüche 5 bis 8.

10. Negative Elektrode einer Sekundärbatterie mit nicht-wässrigem Elektrolyten nach Anspruch 9, wobei eine Elektrodendichte 0,80 g/cm$^3$ oder mehr beträgt.

11. Sekundärbatterie mit nicht-wässrigem Elektrolyten, enthaltend die negative Elektrode nach Anspruch 9 oder 10.

**Revendications**

1. Procédé de fabrication d'un matériau carboné pour une électrode négative de pile rechargeable à électrolyte non aqueux, comprenant :

   (1) une étape d'imprégnation d'alcali qui ajoute 3,0 % en poids à 40,0 % en poids d'un composant contenant un élément de métal alcalin à un produit de carbonisation dérivé d'une plante pour obtenir un produit de carbonisation dérivé d'une plante imprégné d'alcali ;
   (2) une étape de traitement thermique qui traite thermiquement le produit de carbonisation dérivé d'une plante imprégné d'alcali, à 500°C à 100°C dans une atmosphère de gaz non oxydant pour obtenir un précurseur de matériau carboné traité à l'alcali ;
   (3) une étape de déminéralisation en phase gazeuse qui traite thermiquement le précurseur de matériau carboné traité à l'alcali, à 500°C à 1250°C dans une atmosphère de gaz inerte contenant un composé halogène ;
   (4) une étape de pulvérisation du précurseur de matériau carboné obtenu par déminéralisation en phase gazeuse ;
   (5) une étape de cuisson principale du précurseur de matériau carboné pulvérisé, à 800°C à 1600°C dans une atmosphère de gaz non oxydant ; et
   (6) une étape d'enrobage du matériau cuit avec du carbone pyrolytique.

2. Procédé de fabrication d'un matériau carboné pour une électrode négative de pile rechargeable à électrolyte non aqueux selon la revendication 1, dans lequel l'étape de cuisson principale (5) et l'étape d'enrobage (6) sont réalisées par mélange du précurseur de matériau carboné pulvérisé et un composé organique volatil qui est solide à température ambiante et ayant un rapport de carbone produitel qui est inférieur à 5 % en poids quand il est enflammé à 800°C, puis par cuisson principale à 800°C à 1600°C dans une atmosphère de gaz non oxydant.

3. Procédé de fabrication d'un matériau carboné pour une électrode négative de pile rechargeable à électrolyte non aqueux selon la revendication 1 ou 2, comprenant également une étape de traitement thermique à 800°C à 1500°C dans une atmosphère de gaz non oxydant (7).

4. Procédé de fabrication d'un matériau carboné pour une électrode négative de pile rechargeable à électrolyte non aqueux selon l'une quelconque des revendications 1 à 3, dans lequel une quantité ajoutée d'alcali dans le produit de carbonisation dérivé d'une plante imprégné d'alcali est de 5 % en poids ou plus.

5. Matériau carboné pour une électrode négative de pile rechargeable à électrolyte non aqueux, utilisant une plante comme source de carbone et apte à être obtenu par le procédé selon la revendication 1, dans lequel la teneur en élément potassium est de 0,10 % en poids ou moins, la densité réelle déterminée par un procédé pycnométrique utilisant du butanol est de 1,35 à 1,50 g/cm$^3$, la densité réelle mesurée en utilisant de l'hélium comme agent de substitution est de 1,30 à 2,00 g/cm$^3$, du lithium est dopé par voie électrochimique dans le matériau carboné, et dans un cas où un spectre RMN de noyau de lithium est mesuré, un pic de résonance principal décalé de 110 à 160 ppm vers un côté de champ magnétique plus faible apparaît par rapport à un pic de résonance de LiCl comme substance de référence.

6. Matériau carboné pour une électrode négative de pile rechargeable à électrolyte non aqueux selon la revendication 5, dans lequel un rapport de surface spécifique de pressage (A/B) d'une surface spécifique (A) déterminé par une méthode BET quand le matériau carboné est pressé à 2,6 MPa et d'une surface spécifique (B) avant le pressage est de 10 ou moins.

7. Matériau carboné pour une électrode négative de pile rechargeable à électrolyte non aqueux selon la revendication 5 ou 6, dans lequel un rapport d'un atome d'hydrogène et d'un atome de carbone déterminé par analyse élémentaire est de 0,10 ou moins.

8. Procédé de fabrication d'un matériau carboné pour une électrode négative de pile rechargeable à électrolyte non aqueux selon l'une quelconque des revendications 5 à 7, dans lequel la densité réelle déterminée par un procédé pycnométrique utilisant du butanol est de 1,35 à 1,46 g/cm$^3$.

9. Electrode négative de pile rechargeable à électrolyte non aqueux comprenant le matériau carboné selon l'une quelconque des revendications 5 à 8.

**10.** Electrode négative de pile rechargeable à électrolyte non aqueux selon la revendication 9, dans laquelle une densité d'électrode est de 0,80 g/cm$^3$ ou plus.

**11.** Pile rechargeable à électrolyte non aqueux comprenant l'électrode négative selon la revendication 9 ou 10.

**EP 3 358 656 B1**

**REFERENCES CITED IN THE DESCRIPTION**

**Patent documents cited in the description**

- EP 2892096 A
- JP 8064207 A
- JP 2008010337 A
- JP 9007598 A